(19) Europäisches Patentamt
European Patent Office
Office européen des brevets

(11) **EP 3 329 806 B1**

(12) **FASCICULE DE BREVET EUROPEEN**

(45) Date de publication et mention
de la délivrance du brevet:
**15.07.2020 Bulletin 2020/29**

(51) Int Cl.:
*A47F 5/00* (2006.01)          *A47F 5/10* (2006.01)
*G01C 9/00* (2006.01)          *G01P 15/00* (2006.01)
*A47B 97/00* (2006.01)

(21) Numéro de dépôt: **17205172.4**

(22) Date de dépôt: **04.12.2017**

(54) **GONDOLE COMPRENANT UN SYSTÈME DE CONTRÔLE DE CHARGE ET PROCÉDÉ DE CONTRÔLE DE CHARGE POUR UNE TELLE GONDOLE**

SHELF COMPRISING A LOAD CONTROL SYSTEM AND PROCESS OF LOAD CONTROL FOR SUCH A SHELF

REGALSYSTEM AUFWEISEND EIN BELADUNGSSTEUERUNGSSYSTEM, UND VERFAHREN ZUR STEUERUNG DER BELADUNG EINES SOLCHEN REGALSYSTEMS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.12.2016 FR 1661954**

(43) Date de publication de la demande:
**06.06.2018 Bulletin 2018/23**

(73) Titulaire: **HMY Group
89470 Moneteau (FR)**

(72) Inventeur: **DESSEIX, Nicolas
89470 Moneteau (FR)**

(74) Mandataire: **Santarelli
49, avenue des Champs-Elysées
75008 Paris (FR)**

(56) Documents cités:
**EP-A1- 0 624 334      JP-A- 2009 201 926
JP-A- 2010 119 457**

**Description**

La présente invention concerne le mobilier de stockage et/ou de présentation de marchandises et plus particulièrement une gondole comprenant un système de contrôle de charge et un procédé de contrôle de charge pour une telle gondole.

Les gondoles telles que représentées par exemple dans le document JP2009201926A sont très couramment utilisées dans les magasins et les entrepôts pour présenter ou stocker des marchandises de tailles et de formes variées.

Typiquement, une gondole comprend un piètement adapté à maintenir un ou plusieurs montants dans une position sensiblement verticale, auxquels sont assujetties mécaniquement une ou plusieurs tablettes sur lesquelles peuvent être déposées les marchandises.

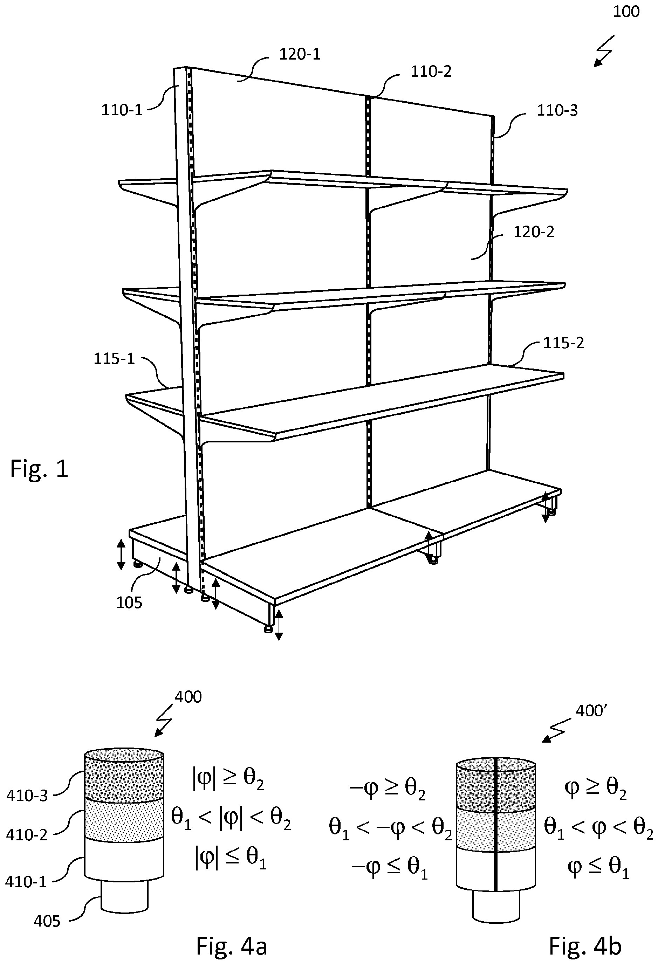

La figure 1 illustre schématiquement un exemple d'une gondole 100, de type standard, à double face, sans tête de gondole. Elle comprend ici un piètement 105 constitué, notamment, d'une embase (ou tablette de base) et d'au moins trois pieds assurant la stabilité de la gondole. Trois montants verticaux 110-1, 110-2 et 110-3, par exemple des montants à crémaillère, sont ici assujettis mécaniquement à l'empiétement 105 dans une position sensiblement verticale.

Ces montants verticaux permettent le montage de tablettes, typiquement à différentes hauteurs, par exemple les tablettes 115-1 et 115-2 montées ici sur deux faces opposées. Des panneaux de fond 120-1 et 120-2 peuvent être disposés entre les montants pour séparer les côtés de la gondole.

Les forces exercées entre le sol et les pieds de la gondole, représentées par des flèches sur la figure 1, résultent du poids de la gondole et de celui des marchandises disposées sur les tablettes.

Chaque gondole peut accepter une charge maximum prédéterminée, calculée, en particulier, en fonction de la configuration de la gondole et des matériaux utilisés. Cette charge maximum autorisée a pour but d'éviter une détérioration de la gondole ou son basculement (pouvant blesser une personne située à proximité).

Il existe aujourd'hui essentiellement deux approches pour assurer le respect d'une telle contrainte de charge et ainsi assurer une certaine sécurité liée à l'utilisation de la gondole.

La première repose sur l'estimation théorique du poids des marchandises pouvant être disposées sur la gondole afin de donner une indication à un utilisateur d'une quantité maximale de marchandises à disposer sur la gondole selon les caractéristiques de cette dernière. Elle repose essentiellement sur la connaissance du poids des marchandises considérées, de leur volume et de la façon dont elles peuvent être disposées sur la gondole au regard des contraintes de charge. En pratique, une telle solution est difficile à mettre en œuvre car elle nécessite un calcul lié à chaque marchandise ou à chaque combinaison de marchandises, le nombre de combinaisons pouvant être particulièrement important et pouvant évoluer avec le temps.

La seconde solution consiste à déterminer *in situ* le poids des marchandises disposées sur la gondole. Le poids mesuré peut être indiqué à un utilisateur ou comparé au poids maximum autorisé afin de déclencher, le cas échéant, une alerte de surcharge.

Une solution connue pour mesurer ce poids consiste à disposer des capteurs de pression sur chaque pied de la gondole.

Cependant, si une telle solution peut s'avérer efficace, elle présente plusieurs inconvénients parmi lesquels un coût élevé lié à l'utilisation d'un capteur par pied, des problèmes de fiabilité liés à la position des capteurs susceptibles de recevoir des coups ou des projections de liquide de nettoyage des sols et une complexité importante de conversion des pressions exercées sur chaque pied en une masse globale de chargement de la gondole.

L'invention permet de résoudre au moins un des problèmes exposés précédemment.

L'invention a ainsi pour objet une gondole pour marchandise comprenant au moins un montant, au moins une tablette de chargement assujettie mécaniquement audit montant et un piètement pour maintenir ledit montant dans une position prédéterminée, la gondole comprenant en outre un dispositif de mesure spatiale placé dans la partie supérieure dudit au moins un montant permettant de déterminer une valeur représentative d'une inclinaison du montant par rapport à une valeur de référence et un dispositif de traitement de mesures spatiales configuré pour calculer une donnée représentative d'une inclinaison dudit au moins un montant par rapport à une référence prédéterminée associée audit piètement, le dispositif de traitement de mesures spatiales étant configuré pour activer un dispositif d'alerte si la variation d'inclinaison dudit au moins un montant par rapport à ladite référence prédéterminée excède au moins un seuil.

Une gondole selon l'invention permet ainsi de surveiller son chargement de façon fiable et économique.

Selon un mode de réalisation particulier, ledit dispositif de mesure spatiale comprend un accéléromètre et/ou un inclinomètre contribuant à la fiabilité et au faible coût de la surveillance de la charge de la gondole.

Toujours selon un mode de réalisation particulier, ledit dispositif de traitement de mesures spatiales comprend des moyens de stockage pour stocker des données de configuration, lesdites données de configuration permettant de calculer une inclinaison dudit au moins un montant par rapport à ladite référence prédéterminée à partir de mesures effectuées par le dispositif de mesure spatiale. La gondole selon l'invention est ainsi simple à mettre en œuvre.

Toujours selon un mode de réalisation particulier, la gondole comprend en outre ledit dispositif d'alerte de telle sorte à être autonome ou quasi autonome.

Toujours selon un mode de réalisation particulier, ledit dispositif d'alerte comprend au moins deux indicateurs visuels indiquant un niveau de charge, au moins un indicateur visuel étant représentatif d'un état de charge conforme aux spécifications de ladite gondole et un indicateur visuel étant représentatif d'un état de charge non conforme aux spécifications de ladite gondole. La surveillance de la charge de la gondole par un opérateur est ainsi particulièrement simple.

Toujours selon un mode de réalisation particulier, ledit dispositif d'alerte comprend une pluralité de sous-dispositifs d'alerte, au moins un sous-dispositif d'alerte étant associé à chacune d'au moins deux faces de ladite gondole pour fournir au moins une indication de charge de la face correspondante. La surveillance de la charge de la gondole par un opérateur est ainsi particulièrement simple et précis.

Toujours selon un mode de réalisation particulier, ledit dispositif de mesure spatiale est configuré pour mesurer un mouvement d'une partie dudit au moins un montant située au-dessus de la tablette la plus haute. La charge de la gondole peut ainsi être surveillée précisément.

Toujours selon un mode de réalisation particulier, la gondole comprend en outre un module de communication, le module de communication étant connecté audit dispositif de traitement de mesures spatiales et étant configuré pour transmettre des données de charge et/ou d'alerte à un système de traitement de l'information distant. Il est ainsi possible de surveiller la charge de la gondole de façon déportée.

Toujours selon un mode de réalisation particulier, ledit dispositif de traitement de mesures spatiales comprend des moyens de stockage pour stocker au moins une donnée relative à au moins une mesure spatiale réalisée par au moins un dispositif de mesure spatiale de ladite gondole et/ou à au moins une alerte activée par le dispositif de traitement de mesures spatiales. Il est ainsi possible de conserver un historique du chargement de la gondole.

L'invention a également pour objet un procédé de contrôle de charge d'une gondole pour marchandises comme décrite précédemment, le procédé comprenant les étapes suivantes,

obtention d'au moins un seuil d'alerte relatif à une inclinaison d'un montant de la gondole ;

obtention d'au moins une mesure spatiale relative à au moins un montant de la gondole et estimation d'au moins une valeur représentative d'une inclinaison dudit au moins un montant de la gondole ;

comparaison de ladite au moins une valeur représentative d'une inclinaison dudit au moins un montant de la gondole avec ledit au moins un seuil d'alerte ;

activation d'une alerte en réponse à ladite comparaison.

Le procédé selon l'invention permet ainsi de surveiller le chargement d'une gondole de façon fiable et économique.

Selon un mode de réalisation particulier, le procédé comprend en outre une étape d'obtention d'au moins une mesure spatiale de référence dudit au moins un montant de la gondole, ladite au moins une valeur représentative d'une inclinaison dudit au moins un montant de la gondole étant estimée en fonction de ladite au moins une mesure spatiale relative audit au moins un montant de la gondole et en fonction de ladite au moins une mesure spatiale de référence dudit au moins un montant de la gondole.

Toujours selon un mode de réalisation particulier, une alerte n'est effectivement activée qu'après avoir été activée au moins deux fois dans un intervalle de temps prédéfini. Le procédé permet ainsi d'éviter de fausses alertes.

Toujours selon un mode de réalisation particulier, le procédé comprend en outre une étape de mémorisation d'au moins une donnée relative à une alerte activée. Le procédé selon l'invention permet ainsi de conserver un historique de surcharges de la gondole.

Toujours selon un mode de réalisation particulier, le procédé comprend en outre une étape d'activation d'une alerte de maintenance si une alerte est activée pendant un intervalle de temps prédéterminé afin de permettre la détection d'une anomalie éventuelle.

Toujours selon un mode de réalisation particulier, le procédé comprend en outre une étape de transmission d'au moins une donnée relative à une mesure spatiale et/ou à une alerte activée permettant de surveiller la charge de la gondole de façon déportée.

D'autres avantages, buts et caractéristiques de la présente invention ressortent de la description détaillée qui suit, faite à titre d'exemple non limitatif, au regard des dessins annexés dans lesquels :

- la figure 1 illustre schématiquement un exemple d'une gondole de type standard, à double face, sans tête de gondole ;
- la figure 2 illustre schématiquement un exemple d'une gondole, à double face, selon un mode de réalisation de l'invention ;
- la figure 3 illustre schématiquement l'inclinaison d'un montant d'une gondole selon la charge supportée par des tablettes fixées à celui-ci ;
- la figure 4, comprenant les figures 4a et 4b, illustre des exemples d'indicateurs visuels pour indiquer un niveau de charge, par exemple un niveau de charge normal, un niveau de charge élevé et une surcharge ;
- la figure 5 illustre schématiquement un exemple d'une gondole à double face, selon un second mode de réalisation de l'invention ;
- la figure 6 illustre un exemple de dispositif d'alerte centralisé tel que le dispositif d'alerte centralisé représenté sur la figure 5 ;
- la figure 7 illustre un exemple d'architecture logique d'un système de contrôle de charge d'une gondole selon certains modes de réalisation ;
- la figure 8 illustre certaines étapes d'un exemple d'algorithme pour contrôler la charge d'une gondole telle que celles décrites en référence aux figures 2 à 7 ;

- la figure 9 illustre certaines étapes d'un algorithme pour générer des alertes lorsqu'une mesure relative estimée représentative de l'inclinaison d'au moins un montant pourvu d'un dispositif de mesure spatiale excède un seuil prédéterminé ; et

- la figure 10, comprenant les figures 10a et 10b, illustre deux exemples d'inclinomètres essentiellement mécanique et électronique, respectivement, permettant de contrôler la charge d'une gondole selon des modes de réalisation de l'invention.

Il est tout d'abord observé qu'en fonction des charges appliquées sur une gondole, d'un côté, de l'autre ou de chaque côté, les montants de la gondole subissent une flexion dans un sens ou dans un autre.

Les inventeurs ont ainsi identifié des méthodes de calcul basées sur la configuration des gondoles et les matériaux utilisés permettent d'établir un lien entre l'angle de flexion des montants, c'est-à-dire leur variation d'inclinaison, et un niveau de charge.

Il est ainsi possible, en particulier, de déterminer une flexion maximale d'un montant de gondole en fonction d'une charge maximale admissible et de caractéristiques de la gondole.

Selon l'invention, une gondole est pourvue, dans la partie supérieure d'au moins un de ses montants, d'un dispositif de mesure spatiale tel qu'un accéléromètre et/ou un inclinomètre, permettant de déterminer une valeur représentative d'une inclinaison du montant par rapport à une valeur de référence (par exemple la verticale).

La comparaison de cette valeur avec un ou plusieurs seuils permet, le cas échéant, de déclencher une ou plusieurs alertes, par exemple une alerte de surcharge, une alerte de risque de surcharge ou une alerte de sous-charge (par exemple représentative d'un besoin de réapprovisionnement de marchandises). La valeur représentative d'une inclinaison d'un montant peut être estimée directement dans un dispositif de mesure spatiale ou dans un dispositif de traitement de mesures spatiales, typiquement un calculateur.

Les alertes peuvent notamment être visuelles et/ou sonores. Elles peuvent être générées par un dispositif fixé à la gondole et/ou un dispositif distant tel qu'un ordinateur portable, une tablette tactile ou un smartphone.

Il est observé ici que d'autres types de dispositif de mesure spatiale peuvent être utilisés, notamment des capteurs optiques mesurant un déplacement. Il peut notamment s'agir d'un système comprenant une source optique telle qu'une source laser et un diffractomètre ou un ensemble de capteurs optiques.

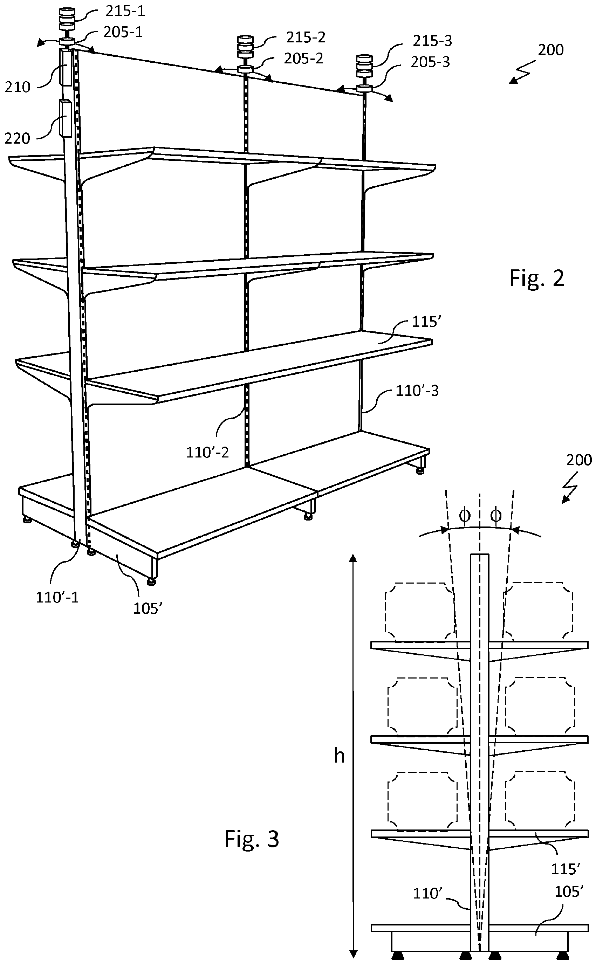

La figure 2 illustre schématiquement un exemple d'une gondole 200, à double face, selon un premier mode de réalisation de l'invention.

Comme la gondole représentée sur la figure 1, la gondole 200 comprend un piètement 105' constitué, notamment, d'une embase et de pieds assurant la stabilité de la gondole. De même, elle comprend ici trois montants verticaux 110'-1, 110'-2 et 110'-3, par exemple des montants à crémaillère, assujettis mécaniquement à l'empiètement 105' dans une position sensiblement verticale. Ils permettent le montage de tablettes, à différentes hauteurs, par exemple le montage des tablettes référencées génériquement 115'.

Il est observé ici que selon d'autres modes de réalisation, les montants sont inclinés par rapport à la verticale.

La gondole 200 est en outre pourvue de dispositifs de mesure spatiale. Selon l'exemple illustré sur la figure 2, chaque montant comprend un tel dispositif. Le montant 110'-1 comprend ainsi le dispositif de mesure spatiale 205-1 tandis que les montants 110'-2 et 110'-3 comprennent ainsi les dispositifs de mesure spatiale 205-2 et 205-3, respectivement.

Les dispositifs de mesure spatiale permettent de mesurer une valeur représentative d'un mouvement du montant, par exemple un déplacement ou un changement d'inclinaison. Selon des modes de réalisation particuliers, ces dispositifs permettent de mesurer un déplacement des montants dans un plan horizontal, notamment le long d'un axe perpendiculaire au plan longitudinal de la gondole, ou mesurer une inclinaison des montants par rapport à un axe vertical, notamment dans un plan vertical perpendiculaire au plan longitudinal de la gondole.

A titre d'illustration, ces dispositifs de mesure spatiale peuvent comprendre un accéléromètre à un, deux ou trois axes, un inclinomètre électronique ou mécanique à un ou deux degrés de liberté ou un capteur optique. Ils peuvent fournir une donnée directement exploitable, par exemple une position ou un angle relatif. L'angle fourni peut également être un angle déterminé à partir d'un plan horizontal (i.e. écart par rapport au plan horizontal). A titre d'exemple, l'accéléromètre commercialisé par la société Murata et portant la référence SCA-2120-D06 peut fournir des valeurs d'accélérations selon deux axes perpendiculaires situés, de préférence, dans un plan de référence horizontal.

Il est observé ici qu'aux fins de mesurer un changement d'inclinaison d'un montant, application pouvant être considérée comme statique, seule la force de gravité est avantageusement prise en compte, à l'exception d'autres accélérations pouvant être liées à des vibrations ou percussions qui sont de préférence filtrées.

L'angle ou les angles d'inclinaison du capteur (et donc du montant auquel est fixé le capteur) peuvent être déterminés à partir de l'accélération mesurée à l'aide de fonctions trigonométriques inverses, par exemple à partir de la relation suivante :

$$\alpha = \sin^{-1}\frac{acc}{k}$$

où $\alpha$ correspond à l'angle d'un axe de mesure du capteur par rapport à un plan horizontal de référence, acc est l'accélération mesurée et k est un coefficient de pondération (correspondant à la mesure qui serait obtenue pour une pleine déviation, i.e. 90°).

La gondole 200 comprend également un dispositif de traitement de mesures spatiales 210, par exemple un calculateur, configuré pour calculer une donnée représentative d'une inclinaison de chaque montant comprenant un dispositif de mesure spatiale par rapport à une référence prédéterminée associée au piètement 105' et pour activer un dispositif d'alerte si l'inclinaison ou la variation d'inclinaison des montants excède un seuil.

Plusieurs seuils peuvent être utilisés pour, par exemple, indiquer une sous-charge (afin de suggérer un réapprovisionnement de la gondole), indiquer un risque de surcharge (si le poids des marchandises s'approche du poids maximum autorisé, par exemple si le poids des marchandises est de moins de 5% inférieur au poids maximum autorisé) et indiquer une surcharge.

Le nombre et la forme des alertes peuvent varier selon les besoins. Il peut notamment s'agir d'alertes sonores ou visuelles, liées à un montant, à plusieurs montants ou à tous les montants de la gondole et liées ou non à une direction ou un sens particulier.

Selon l'exemple illustré sur la figure 2, un indicateur d'alerte visuel comprenant ici trois niveaux, par exemple trois feux colorés, est associé à chaque montant. L'indicateur 215-1 est associé au montant 110'-1, l'indicateur 215-2 est associé au montant 110'-2 et l'indicateur 215-3 est associé au montant 110'-3. Les trois indicateurs correspondent par exemple à une charge normale (e.g. feu vert), une charge élevée (feu orange) et une charge excessive (feu rouge).

Enfin, la gondole 200 est ici pourvue d'un module de communication 220, par exemple un module de communication conforme au standard WiFi (WiFi est une marque) pour adresser des informations de charge et/ou d'alerte à un dispositif distant tel qu'un serveur ou des postes mobiles tels que des tablettes tactiles ou des smartphones. Ce module de communication 220 est relié au dispositif de traitement de mesures spatiales 210 qui contrôle les informations à transmettre. Ces informations sont transmises sur décision du dispositif de traitement de mesures spatiales 210 ou en réponse à des instructions préalablement reçues.

La figure 3 illustre schématiquement l'inclinaison d'un montant d'une gondole selon la charge supportée par des tablettes fixées à celui-ci. La gondole 200 est ici vue en coupe selon un plan vertical perpendiculaire au plan longitudinal de la gondole.

Comme illustré, le montant 110' s'incline dans un sens ou dans un autre, selon un angle $\phi$, en fonction des marchandises disposées sur les tablettes génériquement référencées 115' fixées au montant 110'.

La valeur de l'angle $\phi$ dépend essentiellement de la structure de la gondole, des matériaux utilisés pour sa fabrication et de la charge disposée sur ses tablettes.

La norme NF D 65-031, intitulée « *méthodologie et mode de calcul de la détermination des caractéristiques des gondoles* », précise notamment les valeurs limites de déformation, en particulier la flèche horizontale (paragraphe 6.2 du document NF D 65-031, mars 2009).

Connaissant la flèche horizontale maximale $F_{hmax}$ et la hauteur h de la gondole, il peut en être déduit l'inclinaison maximale $\phi_{max}$ à ne pas dépasser.

Il est observé ici que l'inclinaison d'un montant est liée à la charge totale des tablettes. Par conséquent, l'inclinaison est estimée, de préférence, au-dessus de la tablette la plus haute fixée au montant considéré.

La figure 4, comprenant les figures 4a et 4b, illustre des exemples d'indicateurs visuels pour indiquer un niveau de charge, par exemple un niveau de charge normal, un niveau de charge élevé et une surcharge. Ces indicateurs peuvent être reliés à un seul montant ou à plusieurs.

L'indicateur 400 illustré sur la figure 4a comprend un support 405 et trois feux colorés référencés 410-1, 410-2 et 410-3 visibles dans un champ horizontal de 360°.

Comme illustré, le feu coloré 410-1, par exemple un feu vert, correspond à une inclinaison du montant (ou à une inclinaison maximale d'un montant si l'indicateur est associé à plusieurs montants) inférieure ou égale à un seuil $\theta_1$, selon une direction donnée telle que la direction horizontale perpendiculaire au plan longitudinal de la gondole.

A titre d'illustration, le seuil $\theta_1$ peut être fixé en fonction de la charge maximale autorisée, c'est-à-dire en fonction de l'inclinaison maximale permise, par exemple 80% de l'inclinaison maximale permise ($\theta_1 = 0,80 \times \phi_{max}$).

Le feu coloré 410-2, par exemple un feu orange, correspond ici à une inclinaison du montant ou à une inclinaison maximale d'un montant si l'indicateur est associé à plusieurs montants supérieure au seuil $\theta_1$ et inférieure à un seuil $\theta_2$. A titre d'illustration, le seuil $\theta_2$ peut correspondre à la charge maximale autorisée, c'est-à-dire être égal à l'inclinaison maximale permise ($\theta_2 = \phi_{max}$).

Enfin, le feu coloré 410-3, par exemple un feu rouge, correspond ici à une inclinaison du montant ou à une inclinaison maximale d'un montant si l'indicateur est associé à plusieurs montants supérieure au seuil $\theta_2$.

Il est bien entendu possible de définir d'autres seuils, notamment un seuil de sous-charge, ou de n'utiliser qu'un seul seuil, par exemple $\theta_1$ ou $\theta_2$.

Les indications visuelles fournies par l'indicateur 400 sont indépendantes du sens de l'inclinaison (par exemple indépendante d'une inclinaison d'un côté ou de l'autre de la gondole).

La figure 4b représente un indicateur visuel 400' qui se distingue de l'indicateur visuel 400 illustré sur la figure 4a en ce que les champs de vision des feux sont découpés en secteurs, ici en deux secteurs de 180°. Chaque secteur est associé à un sens d'inclinaison, c'est-à-dire, par exemple, à un côté de la gondole.

Ainsi, l'indicateur illustré sur la figure 4b permet d'identifier un niveau de charge pour chacun des deux côtés d'une gondole, de façon distincte.

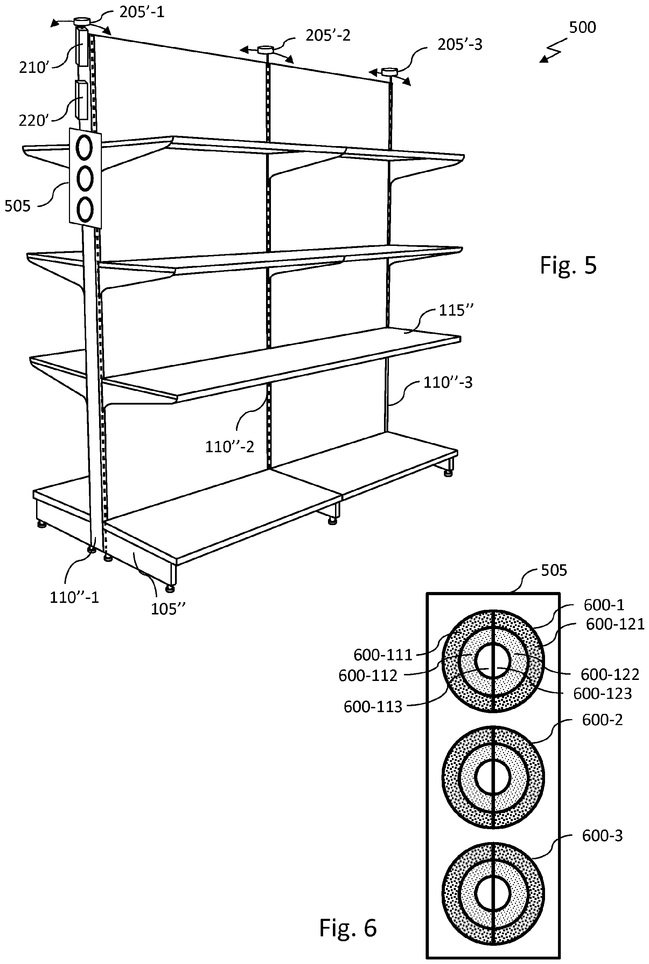

La figure 5 illustre schématiquement un exemple d'une gondole 500, à double face, selon un second mode de réalisation de l'invention.

Comme les gondoles représentées sur les figures 1 et 2, la gondole 500 comprend un piètement 105" constitué, notamment, d'une embase et de pieds assurant la stabilité de la gondole. De même, elle comprend ici trois montants verticaux 110"-1, 110"-2 et 110"-3, par exemple des montants à crémaillère, assujettis mécaniquement à l'empiètement 105" dans une position sensiblement verticale. Ils permettent le montage de tablettes, à différentes hauteurs, par exemple le montage des tablettes référencées génériquement 115". A nouveau, les montants peuvent être inclinés.

La gondole 500 est en outre également pourvue de dispositifs de mesure spatiale similaires à ceux décrits en référence à la figure 2, un dispositif de mesure spatiale étant ici associé à chaque montant: le montant 110"-1 comprend ainsi le dispositif de mesure spatiale 205'-1 tandis que les montants 110"-2 et 110"-3 comprennent ainsi les dispositifs de mesure spatiale 205'-2 et 205'-3, respectivement.

La gondole 500 comprend également un dispositif de traitement de mesures spatiales 210' et un module de communication 220' similaires à ceux décrits en référence à la figure 2.

Enfin, la gondole 500 comprend un dispositif d'alerte centralisé 505 fournissant des informations de charge relatives à chacun des dispositifs de mesure spatiale. Ce dispositif d'alerte centralisé peut être disposé, par exemple, en tête de gondole.

La figure 6 illustre un exemple de dispositif d'alerte centralisé tel que le dispositif d'alerte centralisé 505 représenté sur la figure 5.

Le dispositif d'alerte centralisé comprend ici trois groupes d'indicateurs référencés 600-1 à 600-3 correspondant chacun à un dispositif de mesure spatiale ou à un ensemble de dispositifs de mesure spatiale, c'est-à-dire à un ou plusieurs montants de la gondole. A titre d'illustration, le groupe d'indicateurs 600-1 peut correspondre au montant 110"-1, le groupe d'indicateurs 600-2 peut correspondre au montant 110"-2 et le groupe d'indicateurs 600-3 peut correspondre au montant 110"-3.

Chaque groupe d'indicateurs comprend ici trois feux concentriques représentatif de trois niveaux de charge, divisés en secteurs, ici deux secteurs de 180°, chacun représentatif d'un côté de la gondole.

Ainsi, à titre d'illustration, les indications du groupe d'indicateur 600-1 peuvent être les suivantes :

- le feu 600-111, par exemple de couleur verte, représente un niveau de charge normal d'un premier côté de la gondole ;

- le feu 600-112, par exemple de couleur orange, représente un niveau de charge élevé d'un premier côté de la gondole ;

- le feu 600-113, par exemple de couleur rouge, représente un niveau de surcharge d'un premier côté de la gondole ;

- le feu 600-121, par exemple de couleur verte, représente un niveau de charge normal d'un second côté de la gondole ;

- le feu 600-122, par exemple de couleur orange, représente un niveau de charge élevé d'un second côté de la gondole ; et

- le feu 600-123, par exemple de couleur rouge, représente un niveau de surcharge d'un second côté de la gondole.

Selon un mode de réalisation particulier, les dispositifs de mesure spatiale sont reliés au dispositif de traitement de mesures spatiales selon une logique de chainage câblé permettant de repérer facilement chaque dispositif de mesure spatiale.

De façon similaire, un dispositif de traitement de mesures spatiales peut être relié à des dispositifs de mesure spatiale de plusieurs gondoles.

Il est rappelé ici qu'une logique de chainage câblé permet d'accéder aux dispositifs ainsi reliés de façon séquentielle et cyclique.

Selon un troisième mode de réalisation de l'invention, non représenté, la gondole ne comprend pas de dispositif d'alerte mais un module de communication, par exemple un module de communication similaire aux modules de communication 220 et 220' représentés sur les figures 2 et 5, respectivement, permettant la transmission d'informations de charge et/ou d'alerte à un dispositif distant tel qu'un serveur ou des postes mobiles tels que des tablettes tactiles ou des smartphones.

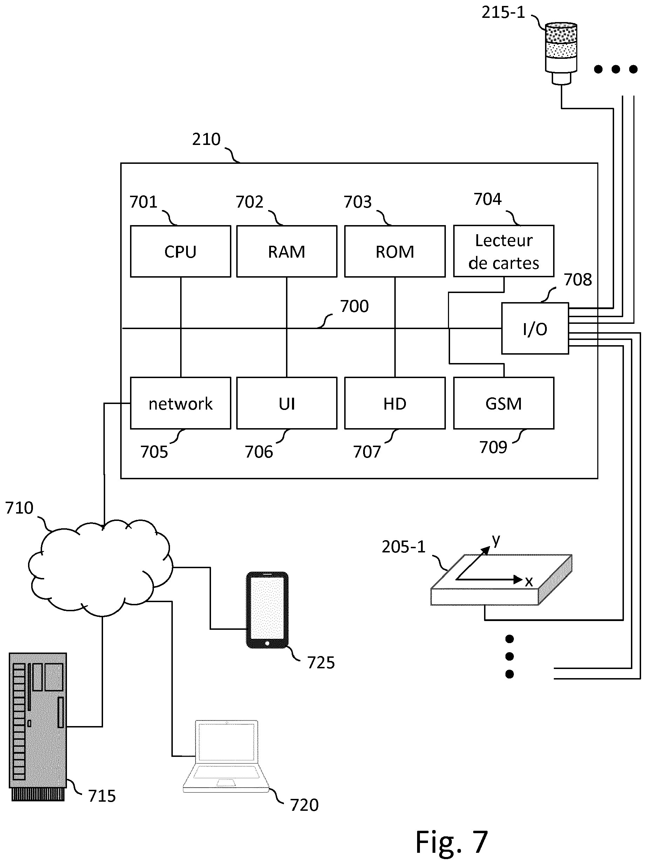

La figure 7 illustre un exemple d'architecture logique d'un système de contrôle de charge d'une gondole selon certains modes de réalisation.

Comme illustré, le système comprend un dispositif de traitement de mesures spatiales 210, par exemple un calculateur, configuré pour traiter des données issues de dispositifs de mesure spatiale, par exemple du dispositif de mesure spatiale 205-1, aux fins d'activer un ou plusieurs dispositifs d'alerte, par exemple le dispositif d'alerte 215-1, sous certaines conditions, et pour transférer des données de charge ou d'alerte, via un réseau de communication 710, à des dispositifs distants tels qu'un serveur 715, un ordinateur portable 720 ou une tablette tactile ou un smartphone 725.

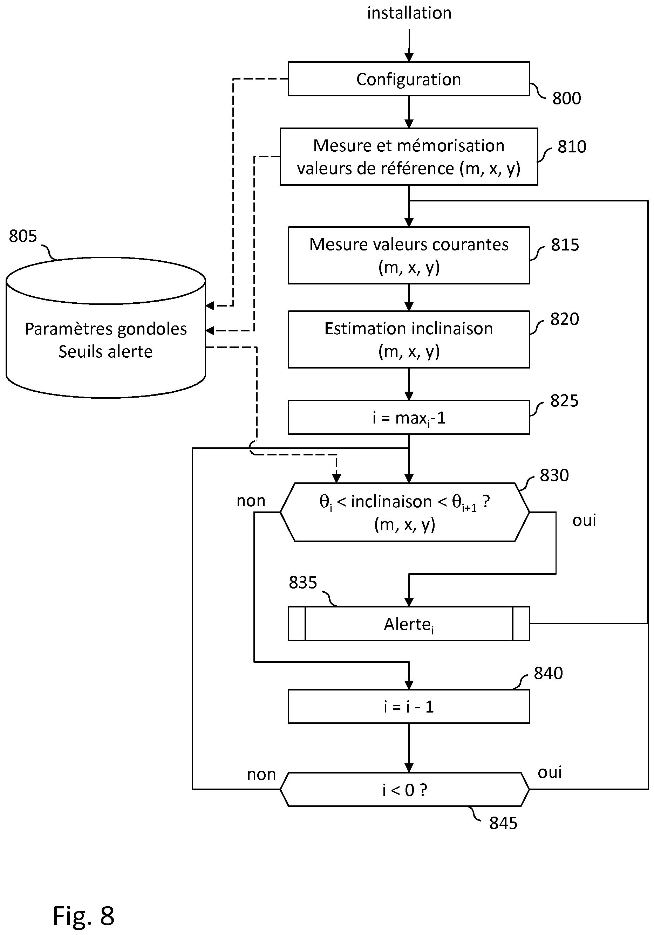

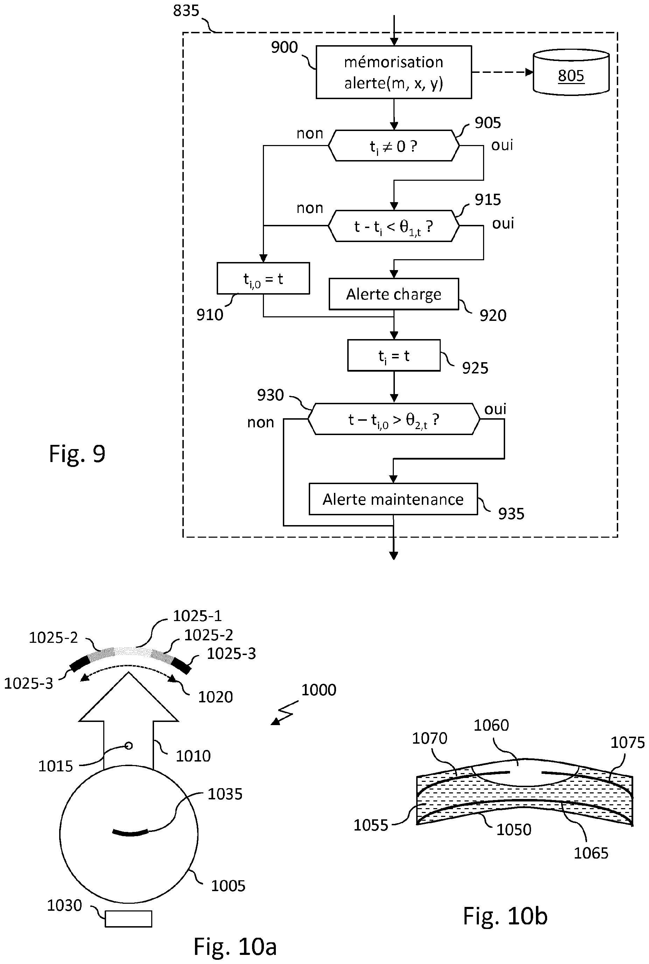

Le dispositif de traitement de mesures spatiales 210 est notamment adapté à mettre en œuvre certaines ou toutes les étapes décrites en référence aux figures 8 et 9.

Il comporte, de préférence, un bus de communication 700 auquel peuvent être reliés :

- une unité centrale de traitement ou microprocesseur 701 (CPU, sigle de *Central Processing Unit* en terminologie anglo-saxonne) ;

- une mémoire vive ou mémoire cache 702 (RAM, acronyme de *Random Access Memory* en terminologie anglo-saxonne) comportant des registres adaptés à enregistrer des variables et paramètres créés et modifiés au cours de l'exécution de programmes comprenant des instructions pour exécuter, notamment, toutes ou certaines des étapes décrites en référence aux figures 8 et 9 ;
- une mémoire morte 703 (ROM, acronyme de *Read Only Memory* en terminologie anglo-saxonne) pouvant comporter le système d'exploitation et des programmes ;
- un lecteur 704 de support amovible de stockage (non représenté) tel qu'une carte mémoire ou un disque, par exemple un disque DVD ;
- une interface de communication 705 reliée à un réseau de communication 710, par exemple une interface de communication filaire à un réseau de type ethernet ou une interface de communication sans fil à un réseau de type WiFi (WiFi est une marque), l'interface étant apte à transmettre et à recevoir des données, notamment à transmettre des alertes de surcharge ;
- une interface utilisateur 706 (UI, sigle de *User Interface* en terminologie anglo-saxonne) ;
- un disque dur 707 pouvant comporter les programmes précités et des données traitées ou à traiter selon l'invention ;
- une interface d'entrée/sortie 708 pour recevoir des données d'un ou plusieurs dispositifs de mesure spatiale et transmettre des données à un ou plusieurs dispositifs d'alerte ; et
- un module de type téléphonie 709, par exemple GPRS (sigle de *General Packet Radio Services* en terminologie anglo-saxonne), EDGE (sigle de *Enhanced Data Rates for GSM Evolution* en terminologie anglo-saxonne), 3G ou 4G pour permettre d'adresser des données et/ou des commandes à un dispositif distant et/ou d'en recevoir, notamment des données et/ou instructions relatives à des opérations de maintenance.

Le bus de communication permet la communication et l'interopérabilité entre les différents éléments inclus dans le dispositif 210 ou reliés à lui. La représentation du bus n'est pas limitative et, notamment, l'unité centrale est susceptible de communiquer des instructions à tout élément du dispositif 210 directement ou par l'intermédiaire d'un autre élément du dispositif 210.

Le code exécutable de chaque programme permettant à l'appareil programmable de mettre en œuvre les processus selon l'invention, peut être stocké, par exemple, dans un support amovible de stockage, le disque dur 707 ou en mémoire morte 703.

Selon une variante, le code exécutable des programmes pourra être reçu par l'intermédiaire du réseau de communication 710, via l'interface 705, pour être stocké de façon identique à celle décrite précédemment.

De manière plus générale, le ou les programmes pourront être chargés dans un des moyens de stockage du dispositif 210 avant d'être exécutés.

L'unité centrale 701 va commander et diriger l'exécution des instructions ou portions de code logiciel du ou des programmes selon l'invention, instructions qui sont stockées dans le disque dur 707 ou dans la mémoire morte 703 ou bien dans les autres éléments de stockage précités. Lors de la mise sous tension, le ou les programmes qui sont stockés dans une mémoire non volatile, par exemple le disque dur 707 ou la mémoire morte 703, sont transférés dans la mémoire vive 702 qui contient alors le code exécutable du ou des programmes selon l'invention, ainsi que des registres pour mémoriser les variables et paramètres nécessaires à la mise en œuvre de l'invention.

La figure 8 illustre certaines étapes d'un exemple d'algorithme pour contrôler la charge d'une gondole telle que celles décrites en référence aux figures 2 à 7.

Comme illustré, suite à l'installation d'une gondole pourvue d'un système de contrôle de charge selon l'invention, une première étape a pour objet la configuration de ce système (étape 800). Elle vise, en particulier, à mémoriser des valeurs de seuils ou des valeurs permettant de les calculer afin de permettre le déclenchement d'alertes. Ces valeurs, pouvant notamment comprendre un angle d'inclinaison au-delà duquel une alerte de charge élevée doit être déclenchée, un angle d'inclinaison au-delà duquel une alerte de surcharge doit être générée et la hauteur de la gondole, sont ici mémorisées dans la base de données 805. De façon alternative ou complémentaire, elles peuvent être mémorisées ailleurs, en particulier dans un emplacement distant.

Dans une étape suivante (étape 810), une ou plusieurs mesures d'inclinaison de référence sont, de préférence, effectuées. Ces mesures peuvent viser des valeurs permettant de calculer des angles d'inclinaison d'un montant ou directement des angles d'inclinaison du montant (à un modulo près, par exemple si l'angle mesuré est l'angle avec une normale au montant) et/ou permettre la correction d'une valeur mesurée ultérieurement pour tenir compte d'un éventuel défaut de verticalité (typiquement lié à l'installation). Ces valeurs sont ici mémorisées dans la base de données 805. A nouveau, elles peuvent être mémorisées ailleurs, notamment dans un emplacement distant.

Dans un souci de clarté, il est considéré ici que les valeurs mesurées par les dispositifs de mesure spatiale sont représentatives des angles d'inclinaison des montants. Il peut s'agir de valeurs issues d'un accéléromètre à trois axes.

Afin de s'affranchir du bruit inhérent aux dispositifs de mesure spatiale ainsi que de phénomènes transitoires tels que des vibrations ou des percussions (i.e. des perturbations à haute fréquence), plusieurs valeurs sont de préférence obtenues du capteur et traitées afin d'estimer la valeur d'un angle d'un montant et ainsi améliorer sa précision. Un tel traitement peut notamment consister en une moyenne arithmétique ou un filtre passe-bas.

Selon un mode de réalisation particulier, deux valeurs sont mesurées et mémorisées pour chaque montant, l'une correspondant à une inclinaison dans le plan vertical longitudinal de la gondole (direction x dans un plan horizontal) et l'autre un plan vertical perpendiculaire au plan vertical longitudinal de la gondole (direction y dans un plan horizontal).

Ces valeurs sont de préférence mesurées et stockées pour chaque montant (m) pourvu d'un dispositif de mesure spatiale.

Dans une étape suivante (étape 815), une ou plusieurs mesures d'inclinaison sont effectuées. Elles sont, de préférence, de même nature que les mesures de référence préalablement effectuées et peuvent notamment viser des valeurs permettant de calculer des angles d'inclinaison d'un montant ou directement des angles d'inclinaison du montant (à un modulo près).

A nouveau, dans un souci de clarté, il est considéré ici que les valeurs mesurées par les dispositifs de mesure spatiale sont représentatives des angles d'inclinaison des montants.

Ces mesures sont effectuées, de préférence, pour chaque direction (x, y) et chaque montant (m) pourvu d'un dispositif de mesure spatiale.

Dans une étape suivante, une ou plusieurs inclinaisons relatives sont estimées (étape 820) à partir des mesures d'inclinaison effectuées et des valeurs de référence pour tenir compte d'un éventuel défaut, typiquement un défaut d'installation. Il peut s'agir, par exemple, pour chaque mesure d'inclinaison effectuée, d'une simple soustraction entre la mesure d'inclinaison effectuée et la valeur de référence correspondante.

Lorsque plusieurs dispositifs de mesure spatiale sont utilisés pour calculer une inclinaison d'un même montant, par exemple un accéléromètre et un inclinomètre, la fusion des valeurs mesurées est, de préférence, effectuée dans l'étape d'estimation d'une inclinaison relative.

Selon le mode de réalisation illustré sur la figure 8, un index $i$ est ensuite initialisé (étape 825). Il est choisi comme étant égal au nombre de seuils d'alerte moins un.

Il est observé ici que le nombre de seuils d'alerte et la valeur de ces seuils peuvent être les mêmes pour toutes les directions, tous les sens et tous les montants pourvus d'un dispositif de mesure spatiale ou être différents.

La ou les inclinaisons relatives estimées sont ensuite comparées à des seuils d'alertes prédéterminés (étape 830), ici les seuils $\theta_i$ et $\theta_{i+1}$, de préférence pour chacune des directions et chacun des montants pourvus d'un dispositif de mesure spatiale. Selon des modes de réalisation particuliers, le seuil $\theta_{maxi}$ est défini comme étant égale à $+\infty$.

Si une inclinaison relative estimée est comprise entre les seuils $\theta_i$ et $\theta_{i+1}$ une alerte associée à l'index $i$ est activée (étape 835). Une telle activation est décrite plus en détail en référence à la figure 9.

Au contraire, si une inclinaison relative estimée n'est pas comprise entre les seuils $\theta_i$ et $\theta_{i+1}$, l'index $i$ est décrémenté de un (étape 840) et un test est effectué pour déterminer si la valeur de l'index $i$ est inférieure à zéro (étape 840). Si la valeur de l'index $i$ n'est pas inférieure à zéro, le procédé se poursuit à l'étape 830 pour comparer une inclinaison relative estimée avec d'autres seuils. Dans le cas contraire ou après qu'une alerte ait été activée, l'algorithme se poursuit à l'étape 815 pour effectuer d'autres mesures.

Un utilisateur peut arrêter le procédé à tout instant. Il est également possible de l'arrêter selon certaines circonstances, par exemple pour effectuer des opérations de maintenance et/ou mesurer de nouvelles valeurs de références.

La figure 9 illustre certaines étapes d'un algorithme pour générer des alertes lorsqu'une mesure relative estimée représentative de l'inclinaison d'au moins un montant pourvu d'un dispositif de mesure spatiale excède un seuil prédéterminé.

Comme illustré, une première étape a ici pour objet la mémorisation de données concernant l'alerte en cours de traitement (étape 900), par exemple dans la base de données 805 ou dans une autre base de données, locale ou distante. Ces données d'alerte peuvent notamment comprendre la valeur mesurée ayant conduit à l'alerte, la direction de l'inclinaison ayant déclenché l'alerte, son sens, une référence du montant pourvu du dispositif de mesure spatiale à l'origine de la mesure ayant déclenché l'alerte ainsi que la valeur du seuil à l'origine de l'alerte.

Dans une étape suivante, un test est effectué pour déterminer si la valeur de la variable $t_i$, représentant un instant associé à l'index $i$ de l'alerte considérée, est différente de zéro (étape 905), cette variable étant ici initialisée à la valeur zéro lorsque l'algorithme est lancé.

Si la valeur de la variable $t_i$ est égale à zéro, la valeur de la variable $t_{i,0}$ est fixée à celle de l'instant courant $t$ (étape 910). Au contraire, si la valeur de la variable $t_i$ est différente de zéro, un autre test est effectué pour déterminer si la période de temps entre l'instant présent $t$ et l'instant $t_i$ (représentant le dernier instant auquel cette même alerte a été déclenchée) est inférieure à un seuil $\theta_{1,t}$ (étape 915). Si la période de temps entre l'instant présent $t$ et l'instant $t_i$ est inférieure au seuil $\theta_{1,t}$, une alerte de charge est effectivement générée (étape 920).

Comme décrit précédemment, une alerte de charge peut consister en une alerte visuelle, en une alerte sonore et/ou en la transmission de données et/ou de commandes à un ou plusieurs dispositifs distants.

Si, au contraire, la période de temps entre l'instant présent $t$ et l'instant $t_i$ est supérieure ou égale au seuil $\theta_{1,t}$, la valeur de la variable $t_{i,0}$ est fixée à celle de l'instant courant $t$ (étape 910).

Après avoir fixé la valeur de la variable $t_{i,0}$ (étape 910) ou après avoir effectivement généré une alerte (étape 920), la valeur de la variable $t_i$ est fixée à celle de l'instant courant $t$ (étape 925).

Un test est ensuite effectué pour déterminer si la période de temps entre l'instant présent $t$ et l'instant $t_{i,0}$ est supérieure à un seuil $\theta_{2,t}$ (étape 930).

Si la période de temps entre l'instant présent $t$ et l'instant $t_{i,0}$ est supérieure au seuil $\theta_{2,t}$, une alerte de maintenance est générée (étape 935) afin de permettre à un technicien de maintenance de vérifier la configuration et les données de configuration de la gondole. A titre d'illustration, cette alerte peut consister en la transmission d'un message d'alerte à un centre de maintenance, par exemple via une communication de type GPRS, EDGE, 3G ou 4G.

Le seuil $\theta_{1,t}$ représente une période de temps maximale qui doit exister entre deux instants consécutifs auxquels sont effectuées des mesures conduisant à une alerte pour valider cette dernière. Ce seuil peut, par exemple être fixé à 1, 5 ou 10 secondes. Il permet de limiter les fausses alertes.

Le seuil $\theta_{2,t}$ représente la période de temps au-delà de laquelle une alerte est considérée comme permanente et nécessite une opération de maintenance. Ce seuil peut, par exemple être fixé à 24 ou 48 heures. Il est également possible de prévoir une alerte pour une opération de maintenance selon une fréquence prédéterminée, par exemple annuelle.

Selon des modes de réalisation, le dispositif de mesure spatiale peut être mécanique ou essentiellement mécanique.

La figure 10, comprenant les figures 10a et 10b, illustre deux exemples d'inclinomètres essentiellement mécanique et électronique, respectivement, permettant de contrôler la charge d'une gondole selon des modes de réalisation de l'invention.

Comme illustré sur la figure 10a, l'inclinomètre 1000 comprend ici une masse 1005 et un indicateur visuel 1010 assujettis mécaniquement l'un à l'autre avec, de préférence, une possibilité de réglage de la position relative de l'indicateur visuel 1010 par rapport à la masse 1005.

L'ensemble formé de la masse 1005 et de l'indicateur visuel 1010 peut pivoter autour d'un axe horizontal 1015 situé entre une extrémité libre de l'indicateur visuel et le centre de gravité de l'ensemble. L'axe est assujetti mécaniquement à un montant dont l'inclinaison doit être surveillée. Du fait de la gravité, l'ensemble formé de la masse 1005 et de l'indicateur visuel 1010 reste immobile lorsque l'angle du montant varie, permettant de mesurer son inclinaison.

A ces fins, une échelle de référence est placée en regard de l'extrémité libre de l'indicateur visuel. Elle est rigidement liée à un montant dont l'inclinaison est surveillée. Elle peut notamment comprendre une graduation 1020 et des zones visuelles indicatives de charges, par exemple d'une charge normale (1025-1), d'une charge élevée (1025-2) et d'une surcharge (1025-3). A nouveau, un code de couleur, par exemple vert pour la zone correspond à une charge normale, orange pour la zone correspond à une charge élevée et rouge pour la zone correspond à une surcharge, peut être utilisé.

Avantageusement, l'inclinomètre 1000 comprend un capteur de position 1030, par exemple un capteur angulaire, permettant d'obtenir une information de précision de l'ensemble comprenant la masse 1005 et l'indicateur visuel 1010 par rapport au montant comprenant l'inclinomètre ou un point de ce montant, par exemple l'axe de rotation 1015.

L'inclinomètre 1000 comprend en outre, de préférence, un dispositif d'étalonnage 1035, par exemple une vis d'étalonnage, permettant de décaler l'extrémité libre de l'indicateur visuel relativement au centre de gravité de l'ensemble formé de la masse 1005 et de l'indicateur visuel 1010 pour tenir compte, le cas échéant, d'un défaut de montage d'un montant (qui ne serait pas parfaitement vertical).

La figure 10b illustre un capteur d'inclinaison électrolytique. Si, dans un souci de clarté, l'inclinomètre illustré ici mesure une inclinaison selon un seul axe, des capteurs basés sur le même principe peuvent mesurer des inclinaisons selon deux axes.

Comme illustré, l'inclinomètre 1050 comprend une cavité fermée dont la partie supérieure est concave. Cette cavité est partiellement remplie avec une solution électrolytique 1055 et comprend une bulle de gaz 1060, par exemple une bulle d'air. La cavité comprend en outre une électrode de base 1065 totalement immergée dans la solution électrolytique et deux électrodes 1070 et 1075. Selon l'inclinaison du capteur, ces dernières sont plus ou moins immergées dans la solution électrolytique. La tension mesurée aux bornes des électrodes est représentative de l'inclinaison du capteur.

Ainsi, lorsqu'un tel capteur est fixé au montant d'une gondole, il permet d'obtenir l'inclinaison du montant auquel il est fixé.

La demande de brevet WO 96/35101 décrit un exemple de capteur d'inclinaison électrolytique à deux axes.

Enfin, il est observé ici que si la solution présentée permet de contrôler la charge de marchandises dans une gondole, notamment à des fins de sécurité, elle peut également être utilisée pour alerter des utilisateurs d'une sous-charge afin de leur permettre de recharger les gondoles.

Naturellement, pour satisfaire des besoins spécifiques, une personne compétente dans le domaine de l'invention pourra appliquer des modifications dans la description précédente. La présente invention ne se limite pas aux formes de réalisation décrites, d'autres variantes et combinaisons de caractéristiques sont possibles, sans sortir du cadre des revendications annexées.

Dans les revendications, le terme « comporter » n'exclut pas d'autres éléments ou d'autres étapes. L'article indéfini « un » n'exclut pas le pluriel. Un seul processeur ou plusieurs autres unités peuvent être utilisés pour mettre en œuvre l'invention. Les signes de référence ne sauraient être compris comme limitant la portée de l'invention.

## Revendications

1. Gondole (200) pour marchandise comprenant au moins un montant (110'-1, 110'-2, 110'-3), au moins une tablette de chargement (115') assujettie mécaniquement audit montant et un piètement (105') pour maintenir ledit montant dans une position prédéterminée, la gondole comprenant en outre un dispositif de mesure spatiale (205-1, 205-2, 205-3) placé dans la partie supérieure dudit au moins un montant permettant de déterminer une valeur représentative d'une inclinaison du montant par rapport à une valeur de référence et un dispositif de traitement de mesures spatiales (210) configuré pour calculer une donnée représentative d'une inclinaison dudit au moins un montant par rapport à une référence prédéterminée associée audit piètement, le dispositif de traitement de mesures spatiales étant configuré pour activer un dispositif d'alerte si la variation d'inclinaison dudit au moins un montant par rapport à ladite référence prédéterminée excède au moins un seuil.

2. Gondole selon la revendication 1 selon laquelle ledit dispositif de mesure spatiale comprend un accéléromètre et/ou un inclinomètre.

3. Gondole selon la revendication 1 ou la revendication 2 selon laquelle ledit dispositif de traitement de mesures spatiales comprend des moyens de stockage pour stocker des données de configuration, lesdites données de configuration permettant de calculer une inclinaison dudit au moins un montant par rapport à ladite référence prédéterminée à partir de mesures effectuées par le dispositif de mesure spatiale.

4. Gondole selon l'une quelconque des revendications 1 à 3 comprenant en outre ledit dispositif d'alerte.

5. Gondole selon la revendication 4 selon laquelle ledit dispositif d'alerte comprend au moins deux indicateurs visuels indiquant un niveau de charge, au moins un indicateur visuel étant représentatif d'un état de charge conforme aux spécifications de ladite gondole et un indicateur visuel étant représentatif d'un état de charge non conforme aux spécifications de ladite gondole.

6. Gondole selon la revendication 4 ou la revendication 5 selon laquelle ledit dispositif d'alerte comprend une pluralité de sous-dispositifs d'alerte, au moins un sous-dispositif d'alerte étant associé à chacune d'au moins deux faces de ladite gondole pour fournir au moins une indication de charge de la face correspondante.

7. Gondole selon l'une quelconque des revendications 1 à 6 selon laquelle ledit dispositif de mesure spatiale est configuré pour mesurer un mouvement d'une partie dudit au moins un montant située au-dessus de la tablette la plus haute.

8. Gondole selon l'une quelconque des revendications 1 à 7 comprenant en outre un module de communication, le module de communication étant connecté audit dispositif de traitement de mesures spatiales et étant configuré pour transmettre des données de charge et/ou d'alerte à un système de traitement de l'information distant.

9. Gondole selon l'une quelconque des revendications 1 à 8, selon laquelle ledit dispositif de traitement de mesures spatiales comprend des moyens de stockage pour stocker au moins une donnée relative à au moins une mesure spatiale réalisée par au moins un dispositif de mesure spatiale de ladite gondole et/ou à au moins une alerte activée par le dispositif de traitement de mesures spatiales.

10. Procédé de contrôle de charge d'une gondole pour marchandises selon l'une quelconque des revendications 1 à 9, le procédé comprenant les étapes suivantes,
    obtention (800) d'au moins un seuil d'alerte relatif à une inclinaison d'un montant de la gondole ;
    obtention (815) d'au moins une mesure spatiale relative à au moins un montant de la gondole et estimation d'au moins une valeur représentative d'une inclinaison dudit au moins un montant de la gondole ;
    comparaison (830) de ladite au moins une valeur représentative d'une inclinaison dudit au moins un montant de la gondole avec ledit au moins un seuil d'alerte ;
    activation (835) d'une alerte en réponse à ladite comparaison.

11. Procédé selon la revendication 10 comprenant en outre une étape d'obtention (810) d'au moins une mesure spatiale de référence dudit au moins un montant de la gondole, ladite au moins une valeur représentative d'une inclinaison dudit au moins un montant de la gondole étant estimée en fonction de ladite au moins une mesure spatiale relative audit au moins un montant de la gondole et en fonction de ladite au moins une mesure spatiale de référence dudit au moins un montant de la gondole.

12. Procédé selon la revendication 10 ou la revendication 11 selon lequel une alerte n'est effectivement activée qu'après avoir été activée au moins deux fois dans un intervalle de temps prédéfini.

**13.** Procédé selon l'une quelconque des revendications 10 à 12 comprenant en outre une étape de mémorisation (900) d'au moins une donnée relative à une alerte activée.

**14.** Procédé selon l'une quelconque des revendications 10 à 13 comprenant en outre une étape d'activation d'une alerte de maintenance si une alerte est activée pendant un intervalle de temps prédéterminé.

**15.** Procédé selon l'une quelconque des revendications 10 à 14 comprenant en outre une étape de transmission d'au moins une donnée relative à une mesure spatiale et/ou à une alerte activée.

**16.** Programme d'ordinateur comprenant des instructions adaptées à la mise en oeuvre de chacune des étapes du procédé selon l'une quelconque des revendications 10 à 15 lorsque ledit programme est exécuté sur un ordinateur.

**17.** Moyen de stockage d'informations, amovible ou non, partiellement ou totalement lisible par un ordinateur ou un microprocesseur comportant des instructions de code d'un programme d'ordinateur pour l'exécution de chacune des étapes du procédé selon l'une quelconque des revendications 10 à 15.

**Patentansprüche**

**1.** Warenregal (200) umfassend wenigstens einen Ständer (110'-1, 110'-2, 110'-3), wenigstens eine an dem Ständer mechanisch befestigte Beladungsablage (115') und ein Fußgestell (105') zum Halten des Ständers in einer vorbestimmten Position, wobei das Regal ferner eine im oberen Teil des mindestens einen Ständers angeordnete Raummessvorrichtung (205-1, 205-2, 205-3) umfasst, welche einen Wert zu bestimmen erlaubt, der für eine Neigung des Ständers bezüglich eines Bezugswertes repräsentativ ist, sowie eine Vorrichtung (210) zur Raummesswertverarbeitung, die dazu ausgebildet ist, einen Wert zu berechnen, der für eine Neigung des mindestens einen Ständers bezüglich eines dem Fußgestell zugeordneten vorbestimmten Bezugswertes repräsentativ ist, wobei die Vorrichtung zur Raummesswertverarbeitung dazu ausgebildet ist, eine Warnvorrichtung zu aktivieren, wenn die Veränderung der Neigung des mindestens einen Ständers bezüglich des vorbestimmten Bezugswertes wenigstens einen Schwellenwert überschreitet.

**2.** Regal nach Anspruch 1, bei dem die Raummessvorrichtung einen Beschleunigungsmesser und/oder einen Neigungsmesser umfasst.

**3.** Regal nach Anspruch 1 oder Anspruch 2, bei dem die Vorrichtung zur Raummesswertverarbeitung Speichermittel zum Speichern von Konfigurationsdaten umfasst, wobei die Konfigurationsdaten eine Neigung des mindestens einen Ständers bezüglich des vorbestimmten Bezugswertes anhand von Messungen zu berechnen erlauben, die von der Raummessvorrichtung vorgenommen wurden.

**4.** Regal nach einem der Ansprüche 1 bis 3, ferner die Warnvorrichtung umfassend.

**5.** Regal nach Anspruch 4, bei dem die Warnvorrichtung wenigstens zwei optische Anzeiger umfasst, die ein Beladungsniveau anzeigen, wobei wenigstens ein optischer Anzeiger für einen den Spezifikationen des Regals entsprechenden Beladungszustand repräsentativ ist und ein optischer Anzeiger für einen den Spezifikationen des Regals nicht entsprechenden Beladungszustand repräsentativ ist.

**6.** Regal nach Anspruch 4 oder Anspruch 5, bei dem die Warnvorrichtung eine Vielzahl von Warn-Untereinrichtungen umfasst, wobei wenigstens eine Warn-Untereinrichtung jeweils einer der mindestens zwei Seiten des Regals zugeordnet ist, um wenigstens eine Angabe zur Beladung der entsprechenden Seite zu liefern.

**7.** Regal nach einem der Ansprüche 1 bis 6, bei dem die Raummessvorrichtung dazu ausgebildet ist, eine Bewegung eines über der obersten Ablage angeordneten Teils des mindestens einen Ständers zu messen.

**8.** Regal nach einem der Ansprüche 1 bis 7, ferner ein Kommunikationsmodul umfassend, wobei das Kommunikationsmodul mit der Vorrichtung zur Raummesswertverarbeitung verbunden und dazu ausgebildet ist, an ein entferntes Informationsverarbeitungssystem Angaben zur Beladung und/oder Warnhinweise zu übertragen.

**9.** Regal nach einem der Ansprüche 1 bis 8, bei dem die Vorrichtung zur Raummesswertverarbeitung Speichermittel zum Speichern wenigstens einer Angabe zu wenigstens einem von mindestens einer Raummessvorrichtung des Regals durchgeführten Raummessung und/oder zu wenigstens eines von der Vorrichtung zur Raummesswertverarbeitung ausgelösten Alarms.

**10.** Verfahren zur Beladungskontrolle eines Warenregals nach einem der Ansprüche 1 bis 9, wobei das Verfahren die folgenden Schritte umfasst:

- Erhalt (800) wenigstens eines Warnschwellenwertes zu einer Neigung eines Regalständers;
- Erhalt (815) wenigstens eines Raummesswertes zu mindestens einem Regalständer und Schätzen wenigstens eines für eine Neigung des mindestens einen Regalständers repräsentativen Wertes;

- Vergleich (830) des wenigstens einen für eine Neigung des mindestens einen Regalständers repräsentativen Wertes mit dem wenigstens einem Warnschwellenwert;

- Auslösen (835) eines Alarms als Folge des Vergleichs.

11. Verfahren nach Anspruch 10, ferner umfassend einen Schritt zum Erhalt (810) wenigstens eines Raummessbezugswertes des mindestens einen Regalständers, wobei der wenigstens eine für ein Neigung des mindestens einen Regalständers repräsentative Wert in Abhängigkeit des wenigstens einen Raummesswertes bezüglich des mindestens einen Regalständers und in Abhängigkeit des wenigstens einen Raummessbezugswertes des mindestens einen Regalständers geschätzt wird.

12. Verfahren nach Anspruch 10 oder Anspruch 11, bei dem ein Alarm tatsächlich nur dann ausgelöst wird, wenn dieser wenigstens zweimal innerhalb eines vorbestimmten Zeitraums ausgelöst wurde.

13. Verfahren nach einem der Ansprüche 10 bis 12, ferner umfassend einen Schritt zum Speichern (900) wenigstens einer Angabe zu einem ausgelösten Alarm.

14. Verfahren nach einem der Ansprüche 10 bis 13, ferner umfassend einen Schritt zum Auslösen eines Wartungsalarms, wenn ein Alarm während eines vorbestimmten Zeitraums ausgelöst wird.

15. Verfahren nach einem der Ansprüche 10 bis 14, ferner umfassend einen Schritt zum Übertragen wenigstens einer Angabe zu einem Raummesswert und/oder einem ausgelösten Alarm.

16. Computerprogramm, umfassend Anweisungen zum Ausführen eines jeden Schritts des Verfahrens nach einem der Ansprüche 10 bis 15, wenn das Programm auf einem Computer ausgeführt wird.

17. Informationsspeichermedium, austauschbar oder nicht, von einem Computer oder Mikroprozessor ganz oder teilweise lesbar, umfassend Code-Anweisungen eines Computerprogramms zur Ausführung eines jeden Schritts des Verfahrens nach einem der Ansprüche 10 bis 15.

**Claims**

1. A gondola (200) for merchandise comprising at least one upright (110'-1, 110'-2, 110'-3), at least one shelf (115') for bearing load that is mechanically connected to said upright and a base (105') to hold said upright in a predetermined position, the gondola further comprising a spatial measurement device (205-1, 205-2, 205-3) placed in the upper part of said at least one upright making it possible to determine a value representing an inclination of the upright relative to a reference value and a spatial measurement processing device (210) configured to calculate an item of data representing an inclination of said at least one upright relative to a predetermined reference associated with said base, the spatial measurement processing device being configured to activate a warning device if the variation of inclination of said at least one upright relative to said predetermined reference exceeds at least one threshold.

2. A gondola according to claim 1 in which said spatial measurement device comprises an accelerometer and/or an inclinometer.

3. A gondola according to claim 1 or claim 2 in which said spatial measurement processing device comprises storage means for storing configuration data, said configuration data making it possible to calculate an inclination of said at least one upright relative to said predetermined reference from measurements made by the spatial measurement device.

4. A gondola according to any one of claims 1 to 3 further comprising said warning device.

5. A gondola according to claim 4 in which said warning device comprises at least two visual indicators indicating a loading level, at least one visual indicator representing a loading state in accordance with the specifications of said gondola and a visual indicator representing a loading state not in accordance with the specifications of said gondola.

6. A gondola according to claim 4 or claim 5 in which said warning device comprises a plurality of warning sub-devices, at least one warning sub-device being associated with each of at least two faces of said gondola to provide at least one loading indication for the corresponding face.

7. A gondola according to any one of claims 1 to 6 in which said spatial measurement device is configured to measure a movement of part of said at least one upright located above the highest shelf.

8. A gondola according to any one of claims 1 to 7 further comprising a communication module, the communication module being connected to said spatial measurement processing device and being configured to transmit loading and/or warning data to a remote information processing device.

9. A gondola according to any one of claims 1 to 8, in which said spatial measurement processing device comprises storage means for storing at least one item of data relative to at least one spatial measurement made by at least one spatial measurement device of said gondola and/or relative to at least one warning activated by the spatial measurement processing device.

10. A method for checking load of a gondola for merchandise according to any one of claims 1 to 9, the method comprising the following steps,
obtaining (800) at least one warning threshold relative to an inclination of an upright of the gondola;
obtaining (815) at least one spatial measurement relative to at least one upright of the gondola and estimating at least one value representing an inclination of said at least one upright of the gondola;
making a comparison (830) of said at least one value representing an inclination of said at least one upright of the gondola with said at least one warning threshold;
activating (835) a warning in response to said comparison.

11. A method according to claim 10, further comprising a step of obtaining (810) at least one reference spatial measurement of said at least one upright of the gondola, said at least one value representing an inclination of said at least one upright of the gondola being estimated according to said at least one spatial measurement relative to said at least one upright of the gondola and according to said at least one reference spatial measurement of said at least one upright of the gondola.

12. A method according to claim 10 or claim 11 in which a warning is only actually activated after having been activated at least twice within a predefined interval of time.

13. A method according to any one of claims 10 to 12 further comprising a step of storing (900) at least one item of data relative to an activated warning.

14. A method according to any one of claims 10 to 13 further comprising a step of activating a maintenance warning if a warning is activated during a predetermined interval of time.

15. A method according to any one of claims 10 to 14 further comprising a step of transmitting at least one item of data relative to a spatial measurement and/or an activated warning.

16. A computer program comprising instructions configured for carrying out each of the steps of the method according to any one of claims 10 to 15 when said program is executed on a computer.

17. An information storage means, removable or not removable, partially or totally readable by a computer or a microprocessor containing code instructions of a computer program for executing each of the steps of the method according to any one of claims 10 to 15.

100

110-1  120-1  110-2  110-3

120-2

115-1  115-2

**Fig. 1**

105

400

410-3
410-2
410-1
405

$|\varphi| \geq \theta_2$

$\theta_1 < |\varphi| < \theta_2$

$|\varphi| \leq \theta_1$

**Fig. 4a**

400'

$-\varphi \geq \theta_2$     $\varphi \geq \theta_2$

$\theta_1 < -\varphi < \theta_2$     $\theta_1 < \varphi < \theta_2$

$-\varphi \leq \theta_1$     $\varphi \leq \theta_1$

**Fig. 4b**

Fig. 2

Fig. 3

Fig. 5

Fig. 6

Fig. 7

installation

Configuration — 800

Mesure et mémorisation
valeurs de référence (m, x, y) — 810

805

Paramètres gondoles
Seuils alerte

Mesure valeurs courantes
(m, x, y) — 815

Estimation inclinaison
(m, x, y) — 820

$i = max_i - 1$ — 825

830

non   $\theta_i <$ inclinaison $< \theta_{i+1}$ ?
(m, x, y)   oui

835

Alerte$_i$

$i = i - 1$ — 840

non   $i < 0$ ?   oui

845

Fig. 8

835

900 — mémorisation alerte(m, x, y) ----→ 805

905

non ← $t_i \neq 0$ ? → oui

915

non ← $t - t_i < \theta_{1,t}$ ? → oui

$t_{i,0} = t$
910

Alerte charge
920

$t_i = t$
925

930

non ← $t - t_{i,0} > \theta_{2,t}$ ? → oui

Fig. 9

Alerte maintenance
935

1025-1
1025-2
1025-2
1025-3
1025-3
1020

1015
1010

1035

1005

1030

Fig. 10a

1000

1070
1060
1075

1055
1050
1065

Fig. 10b

## RÉFÉRENCES CITÉES DANS LA DESCRIPTION

**Documents brevets cités dans la description**

- JP 2009201926 A

- WO 9635101 A